# EUROPEAN PATENT APPLICATION

(11) **EP 4 851 618 A1**
(43) Date of publication of application: **09.12.2026**
(21) Application number: 24931679.5
(22) Date of filing: 29.11.2024
(51) Int. Cl.: G01N 27/90, G01N 27/9013, G01N 29/07, G01N 29/265

(54) **INSPECTING METHOD, INSPECTING DEVICE, AND MEMBER REPAIR METHOD**

(30) Priority: 28.03.2024 JP 2024054269
(71) Applicant: JFE Steel Corporation, Tokyo 100-0011 (JP)
(72) Inventor: NISHIZAWA, Yuji, Tokyo 100-0011 (JP); TOKUMOTO, Yuta, Tokyo 100-0011 (JP)
(74) Representative: Grünecker Patent- und Rechtsanwälte PartG mbB
(86) International application number: PCT/JP2024/042266
(87) International publication number: WO 2025/203869

(57) **Abstract**

An inspection method according to the present invention is an inspection method for detecting a defective portion from an inspection target member, and the inspection method includes a first detection step of detecting a first signal from an inspection region on a surface of the inspection target member by using an eddy current flaw detector, a second detection step of detecting a second signal from the inspection region by using an ultrasonic thickness gauge, and a determination step of determining that there is a defective portion in the inspection region, when at least one of the first signal and the second signal indicates an abnormal value.

## Description

### Field

The present invention relates to an inspection method, an inspection apparatus, and a member repair method that detect a defective portion such as a corroded portion or a crack, on an inspection target member.

### Background

When an inspection target member including a hollow member such as a pipe or a tank is corroded or damaged, a problem such as leakage of a content occurs. For this reason, various inspection methods of detecting defective portions such as corroded portions and cracks, from the inspection target members have been proposed. For example, Patent Literature 1 describes a method of detecting a defect of a pipe by using an ultrasonic thickness gauge. Furthermore, Patent Literature 2 describes a method of detecting a crack, corrosion thinning, or the like of a pipe by using an eddy current flaw detector. Still furthermore, Patent Literature 3 describes a method of detecting a flaw such as thickness reduction or a crack of the inspection target member by using the eddy current flaw detector.

### Citation List

### Patent Literature

Patent Literature 1: JP S62-124458 A
Patent Literature 2: JP 2008-32508 A
Patent Literature 3: JP 7205642 B2

### Summary

### Technical Problem

The method described in Patent Literature 1 uses a point measurement technique, and therefore, local corroded portions are not detected unless the entire surface of the inspection target member is measured. Furthermore, the ultrasonic thickness gauge usually detects multiple reflection of ultrasonic waves generated between two parallel surfaces, and calculates thickness by multiplying an ultrasonic propagation time by a known sound speed for each material of the inspection target member, assuming that a time interval of the multiple reflection is a reciprocating ultrasonic propagation time. Therefore, for a surface having irregularities or a non-parallel target surface due to corrosion or the like, multiple reflection is not detected, and thickness measurement is prevented. Thus, according to the method described in Patent Literature 1, there is a possibility of overlooking the corroded portion. Therefore, in thickness inspection, thickness in an inspection range needs to be measured, but even if measurement of the thickness of a non-defective portion is achieved, the thickness in a corrosion thickness reduction portion is not measured in some cases, and there is a possibility that the corrosion thickness reduction portion is not detected.

Meanwhile, the eddy current flaw detector is a device to detect a change in thickness of the inspection target member, and therefore, an absolute value of the thickness of the inspection target member is not measured by the method described in Patent Literature 2 or Patent Literature 3. Furthermore, the intensity of a signal detected by the eddy current flaw detector depends on a change in the thickness of the inspection target member, and therefore, it is difficult to detect a corroded portion having a small change in thickness, such as a uniformly thickness reduced portion, by the method described in Patent Literature 2 or Patent Literature 3.

The present invention has been made to solve the above problems, and an object of the present invention is to provide an inspection method and an inspection apparatus that are configured to accurately detect a defective portion from an inspection target member. Another object of the present invention is to provide a member repair method that is configured to suppress occurrence of a trouble caused by a defective portion of a member. Solution to Problem
(1) To solve the problem and achieve the object, an inspection method according to the present invention is the inspection method for detecting a defective portion from an inspection target member. The inspection method includes: a first detection step of detecting a first signal from an inspection region on a surface of the inspection target member by using an eddy current flaw detector; a second detection step of detecting a second signal from the inspection region by using an ultrasonic thickness gauge; and a determination step of determining that there is a defective portion in the inspection region, when at least one of the first signal and the second signal indicates an abnormal value.
(2) Moreover, in the inspection method according to above (1), the determination step may include a step of determining that there is a crack in the inspection region when the first signal indicates the abnormal value and the second signal indicates a normal value, determining that there is pit-shaped thickness reduction in the inspection region when both the first signal and the second signal indicate the abnormal values, and determining that there is uniform thickness reduction in the inspection region when the first signal indicates the normal value and the second signal indicates the abnormal value.
(3) Moreover, a member repair method according to the present invention includes a repairing step of repairing or replacing a defective portion of a member detected using the inspection method according to above (1) or (2).
(4) Moreover, an inspection apparatus according to the present invention is the apparatus for detecting a defective portion from an inspection target member. The inspection apparatus includes: an eddy current flaw detector configured to detect a first signal from an inspection region of a surface of the inspection target member; an ultrasonic thickness gauge configured to detect a second signal from the inspection region; and an information processing device configured to determine that there is a defective portion in the inspection region, when at least one of the first signal and the second signal indicates an abnormal value.
(5) Moreover, the inspection apparatus according to above (4) may further include a moving unit configured to move the eddy current flaw detector and the ultrasonic thickness gauge on the surface of the inspection target member.

### Advantageous Effects of Invention

According to the inspection method and the inspection apparatus of the present invention, it is possible to accurately detect the defective portion from the inspection target member. According to the member repair method of the present invention, it is possible to suppress occurrence of the trouble caused by the defective portion of the member.

### Brief Description of Drawings

[FIG. 1] FIG. 1 is a diagram illustrating results of evaluation of relationships between output signals from an eddy current flaw detector and an electromagnetic ultrasonic thickness gauge, and a corroded portion and a crack.
[FIG. 2] FIG. 2 is a schematic diagram illustrating a configuration of a self-propelled carrier illustrated in FIG. 1.
[FIG. 3] FIG. 3 is a flowchart illustrating a procedure of an inspection method according to an embodiment of the present invention.
[FIG. 4] FIG. 4 is a diagram illustrating a result of inspection according to an example.

### Description of Embodiments

### [Concept of present invention]

First, a concept of an inspection method and an inspection apparatus according to the present invention will be described.

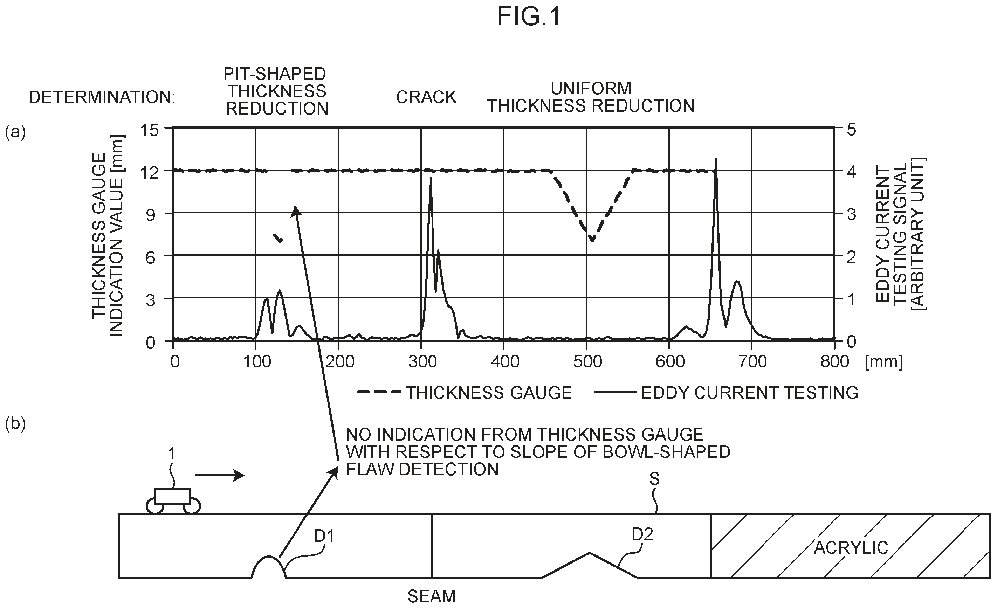

A defective portion of a hollow member such as a pipe or a tank includes a corroded portion, a crack, or the like, and the corroded portion has a form such as pit-shaped thickness reduction or uniform thickness reduction. Such a defective portion leads to a trouble such as leakage of a content, and needs to be detected earlier. Therefore, for detection of the corroded portion and the crack, the inventors of the present invention evaluated relationships between output signals from an eddy current flaw detector and an electromagnetic ultrasonic thickness gauge, and the defective portions (particularly, the corroded portion and the crack). Specifically, steel plates S on which artificial flaws simulating the corroded portion and the crack as illustrated in FIG. 1(b) have been formed were prepared, a self-propelled carrier 1 with the eddy current flaw detector and the electromagnetic ultrasonic thickness gauge mounted thereon was made to travel on the steel plates S, and the relationships between the output signals from the eddy current flaw detector and the electromagnetic ultrasonic thickness gauge, and the corroded portion and the crack were evaluated.

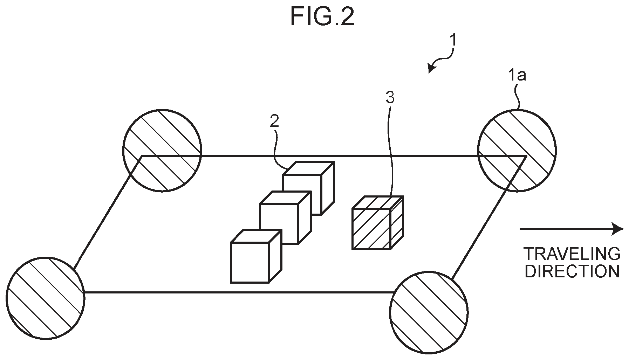

Specifically, in the steel plates S, a bowl-shaped defect D1 (30ϕ, depth corresponding to 40% of original thickness (12 mm) of a steel plate S) simulating the pit-shaped thickness reduction and a V-shaped groove D2 (depth of 5 mm, width of 100 mm) simulating the uniform thickness reduction were formed. The V-shaped groove D2 is formed by thinning the original thickness of a steel plate S by approximately 42%, and is at a general detection target level. Furthermore, an end of the steel plate S in which the bowl-shaped defect D1 was formed and an end of the steel plate S in which the V-shaped groove D2 was formed were abutted and aligned, with a seam between the steel plates S simulated as a crack. The self-propelled carrier 1 has a specification to travel while being attracted by drive wheels 1a with magnet, and an external computer gave a travel instruction and a flaw detection instruction to the self-propelled carrier 1 by wireless communication. Furthermore, an encoder was attached to one of the drive wheels 1a with magnet (see FIG. 2), and a travel distance of the self-propelled carrier 1 was measured and stored by the encoder.

For an eddy current flaw detector 2 (see FIG. 2), an E-shaped coil was used and arranged to obtain a difference in detection signal along a traveling direction of the self-propelled carrier 1. Furthermore, the E-shaped coil was set to have a leg interval of 20 mm, a number of windings of 200 turns, an excitation frequency of 10 kHz, and a liftoff of 3 mm. Furthermore, the E-shaped coils of three channels were arranged at a pitch of 30 mm along a width direction of the self-propelled carrier 1, and measurement was performed by switching the channels every 100 ms. Furthermore, a power source for each of the E-shaped coils was a battery, and had a system different from that of the self-propelled carrier 1, as a countermeasure against noise. Then, AD conversion of the detection signal was performed in each E-shaped coil, and the detection signal was transmitted to the external computer by wireless communication and recorded every 100 ms.

For the electromagnetic ultrasonic thickness gauge 3 (see FIG. 2), the electromagnetic ultrasonic thickness gauge generating a transverse wave was used to perform measurement with a center frequency of 4 MHz, in a so-called echo-echo mode. Furthermore, in order to detect multiple reflected bottom echoes, gates were set for so-called a B1 echo and a B2 echo, and a plate thickness of the steel plate S was calculated using a difference in time. In the calculation, a transverse sound speed was set to 3240 m. Furthermore, the number of times of synchronous addition was set to eight times, and an automatic gain up to 100 dB was set. When the B1 echo and the B2 echo were not detected in this automatic gain state, it was determined that the plate thickness was unmeasurable. A result of the measurement was transmitted to the external computer by wireless communication and recorded in synchronization with a result of measurement by the eddy current flaw detector 2.

Results of the evaluation are illustrated in FIG. 1(a). As illustrated in FIG. 1(a), in an output signal (eddy current testing signal) from the eddy current flaw detector 2, change was found in the bowl-shaped defect D1 (pit-shaped thickness reduction) and the seam (crack) between the steel plates S, and the bowl-shaped defect D1 and the seam were detected. In contrast, in the V-shaped groove D2 (uniform thickness reduction), a large change was not found in the eddy current testing signal, and the V-shaped groove D2 was not detected with a realistic S/N ratio. Specifically, in the V-shaped groove D2, the intensity of the eddy current testing signal is smaller than that in the bowl-shaped defect D1 positioned at substantially the same depth. It is considered that this is because the width of the V-shaped groove D2 is larger than a width of the eddy current flaw detector 2 and a change in detected plate thickness is small.

In contrast, in an output (thickness gauge indication value) from the electromagnetic ultrasonic thickness gauge 3, the indication value always indicated the original thickness (12 mm) of the steel plate S at a seam portion. Furthermore, in the bowl-shaped defect D1, the indication value indicating the plate thickness (remaining thickness) at a bottom portion was obtained only at a position corresponding to the bottom portion of the bowl-shaped defect D1, and a reflection signal was weakened at a slope portion and the indication value was not obtained. Furthermore, in the V-shaped groove D2, the indication value of a plate thickness (remaining thickness) smaller than the original thickness of the steel plate S was obtained over the entire V-shaped groove D2, and presence of a thickness reduction portion was confirmed.

The results of the evaluation summarized are shown in Table 1 below. In other words, as shown in Table 1, in a non-defective portion, the eddy current testing signal has no reaction, and the thickness gauge indication value indicates the original thickness of the steel plate S. Furthermore, in the crack, the eddy current testing signal has a reaction, and the thickness gauge indication value indicates the original thickness of the steel plate S. Furthermore, in the pit-shaped thickness reduction, the eddy current testing signal has a reaction, and the thickness gauge indication value is unmeasurable or the plate thickness indication value indicates the remaining thickness of the steel plate S. Furthermore, in uniform thickness reduction, the eddy current testing signal has no reaction, and the thickness gauge indication value indicates the remaining thickness of the steel plate S.

### [Table 1]

**(Table 1)**

| Corrosion form | Eddy current flaw detection | Electromagnetic ultrasonic thickness gauge |
|---|---|---|
| Non-defective portion | No reaction | Original thickness indication |
| Crack | × Reaction | ○ Original thickness indication |
| Pit-shaped thickness reduction | × Reaction | × Unmeasurable or remaining thickness indication |
| Uniform thickness reduction | No reaction | Remaining thickness indication |

Therefore, as shown in Table 2 below, it was newly found that combining the output signal from the eddy current flaw detector and the output signal from the electromagnetic ultrasonic thickness gauge makes it possible to determine whether an inspection region is the non-defective portion, the crack, the pit-shaped thickness reduction, or the uniform thickness reduction. In other words, as shown in Table 2, when the eddy current testing signal has no reaction and the thickness gauge indication value indicates the original thickness of the steel plate S, it can be determined that the inspection region is the non-defective portion. Furthermore, when the eddy current testing signal has a reaction and the thickness gauge indication value indicates the original thickness of the steel plate S, it can be determined that there is the crack in the inspection region. Furthermore, when the eddy current testing signal has a reaction and the plate thickness is unmeasurable or the plate thickness indication value indicates the remaining thickness of the steel plate S, it can be determined that there is the pit-shaped thickness reduction in the inspection region. Furthermore, when the eddy current testing signal has no reaction and the thickness gauge indication value indicates the original thickness of the steel plate S, it can be determined that there is the uniform thickness reduction in the inspection region.

### [Table 2]

**Table 2**

| Eddy current flaw detection | Electromagnetic ultrasonic thickness gauge | Corrosion form | Determination |
|---|---|---|---|
| ○ No reaction | ○ Original thickness indication | Non-defective portion | Non-defective portion |
| × Reaction | ○ Original thickness indication | Crack | Defective portion |
| × Reaction | × Unmeasurable or remaining thickness indication | Pit-shaped thickness reduction | Defective portion |
| ○ No reaction | × Remaining thickness indication | Uniform thickness reduction | Defective portion |

Therefore, in the inspection method and the inspection apparatus according to the present invention, it is determined whether the inspection region is any of the non-defective portion or the defective portion, and further whether the defective portion is any of the crack, the pit-shaped thickness reduction, or the uniform thickness reduction, on the basis of a combination of the output signal from the eddy current flaw detector and the output signal from the electromagnetic ultrasonic thickness gauge.

Note that the uniform thickness reduction has a state in which an inspection target member has a surface that is smooth and uniformly corroded, but may have a state in which the pit-shaped thickness reduction is continuously positioned due to drain accumulation or the like. This state is an intermediate state between the uniform thickness reduction and the pit-shaped thickness reduction, but a surface of a measurement target is non-uniform, and therefore, the ultrasonic wave is scattered, and measurement with the electromagnetic ultrasonic thickness gauge is difficult. However, continuous presence of the pit-shaped thickness reduction means that the plate thickness is frequently and continuously changed, and when such a region is inspected by the eddy current flaw detector, a signal having a large amplitude is continuously detected. Therefore, combination of the electromagnetic ultrasonic thickness gauge and the eddy current flaw detector makes it possible to detect the continuous presence of the pit-shaped thickness reduction. In this way, it is possible to detect the presence or absence of the thickness reduction from a difference between the indication values of the electromagnetic ultrasonic thickness gauge, even in the uniform thickness reduction and the non-defective portion that are not distinguishable only by the eddy current flaw detector. Furthermore, it is possible to detect single pit-shaped thickness reduction and continuous pit-shaped thickness reduction, on the basis of whether the eddy current testing signal is continuously detected. Furthermore, there is a possibility that the ultrasonic thickness gauge indicates the plate thickness of an original thickness portion around the pit-shaped thickness reduction, and it is preferable to determine the thickness reduction by giving priority to the eddy current testing signal.

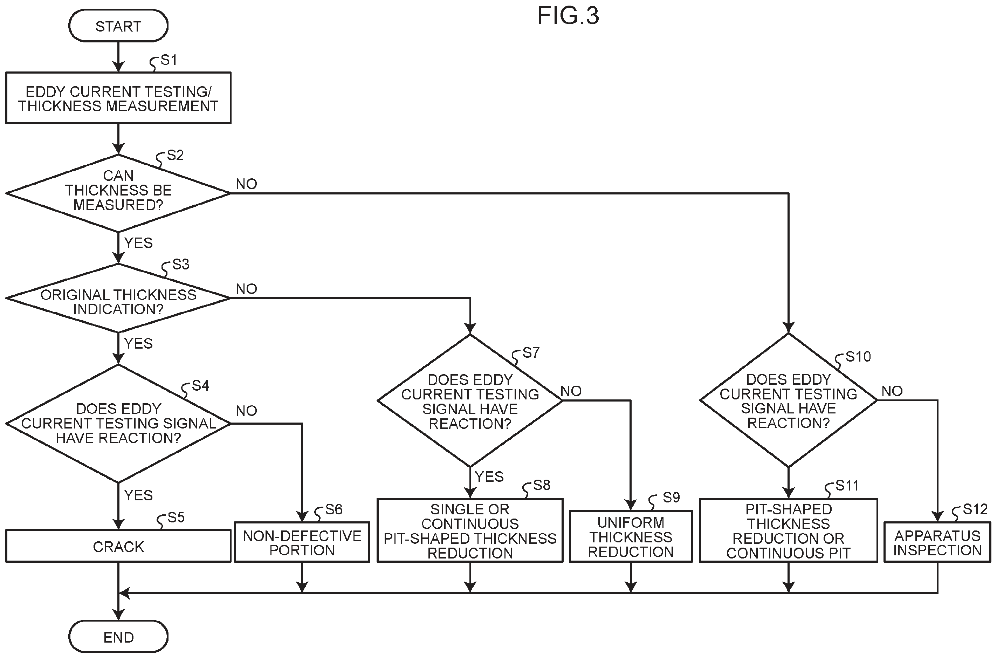

An exemplary procedure of a process of detecting the defective portion from the inspection target member by using Table 2 is illustrated in FIG. 3. Note that the following determination operation is implemented by comparing the eddy current testing signal having been measured and the plate thickness with data shown in Table 2 by an information processing device such as a computer. More specifically, at least Steps S2 to S4, S7, and S10, which are described later, are performed by the information processing device. As illustrated in FIG. 3, for detection of the defective portion of the inspection target member by using Table 2, first, the eddy current flaw detector and the electromagnetic ultrasonic thickness gauge are used to measure the eddy current testing signal and the plate thickness in the inspection region of the inspection target member, and these results of the measurement are recorded in the information processing device (Step S1). Note that a measurement position may be displaced depending on arrangement positions of the eddy current flaw detector and the electromagnetic ultrasonic thickness gauge, and thus it is desirable to compensate and correct the measurement position.

Next, it is determined whether the plate thickness can be measured in the inspection region (Step S2), and when the plate thickness can be measured (Step S2: Yes), it is determined whether the measured plate thickness indicates the original thickness of the inspection target member (Step S3). Then, when the measured plate thickness indicates the original thickness of the inspection target member (Step S3: Yes), it is determined whether the eddy current testing signal has a reaction (Step S4). Then, when the eddy current testing signal has a reaction (Step S4: Yes), it is determined that there is the crack in the inspection region (Step S5). In contrast, when the eddy current testing signal has no reaction (Step S4: No), it is determined that the inspection region is the non-defective portion (Step S6).

In contrast, when it is determined that the plate thickness measured in the processing of Step S3 indicates a value different from the original thickness of the inspection target member (Step S3: No), it is determined whether the eddy current testing signal has a reaction (Step S7). Then, when the eddy current testing signal has a reaction (Step S7: Yes), it is determined that there is single or continuous pit-shaped thickness reduction in the inspection region (Step S8). In contrast, when the eddy current testing signal has no reaction (Step S7: No), it is determined that there is the uniform thickness reduction in the inspection region (Step S9). Furthermore, when the plate thickness cannot be measured in the inspection region in the processing of Step S2 (Step S2: No), it is determined whether the eddy current testing signal has a reaction (Step S10). Then, when the eddy current testing signal has a reaction (Step S10: Yes), it is determined that there is the single or continuous pit-shaped thickness reduction in the inspection region (Step S11).

In contrast, when the eddy current testing signal has no reaction (Step S10: No), it is determined that there is a possibility that the apparatus has a failure, and the apparatus is inspected (Step S12). For example, when no indication value is obtained from the electromagnetic ultrasonic thickness gauge and no eddy current testing signal is detected, it indicates that no eddy current testing signal is output although an inner surface is so rough that the reflection signal of the electromagnetic ultrasonic signal does not return, and therefore, failure of the eddy current flaw detector is suspected. Alternatively, a failure is suspected, such as the failure of the eddy current testing signal or the electromagnetic ultrasonic signal is not detected due to inappropriate lift-off of the eddy current flaw detector. All of these need to be inspected and repaired as the failure of the apparatus. In the example of FIG. 3, determination is made from a result of plate thickness measurement, but the determination may be made from a result of eddy current testing. Alternatively, a result of the plate thickness measurement and a result of the eddy current testing may be matched to each other at the same time to detect whether the results correspond to any item of Table 2.

Then, after a result of the determination is recorded, the eddy current flaw detector and the electromagnetic ultrasonic thickness gauge are moved to a next inspection region to perform the processing similarly, and the entire inspection region of the inspection target member is inspected. Hereinafter, configurations of the self-propelled carrier 1, the eddy current flaw detector 2, and the electromagnetic ultrasonic thickness gauge 3 that are used in the inspection method and the inspection apparatus according to the present invention will be specifically described.

### [Self-propelled carrier]

The self-propelled carrier 1 corresponds to a moving unit in the inspection apparatus according to the present invention. The self-propelled carrier 1 is a carrier that is attracted to the inspection target member and is self-propelled. In order to detect a flaw while self-propelling on the inspection target member, the self-propelled carrier 1 includes an attraction mechanism and a self-propelling mechanism. In an example, the self-propelled carrier 1 includes a magnetic wheel so as to be attracted while traveling on the inspection target member. In this configuration, the magnet wheel may serve as both the attraction mechanism and a traveling mechanism. In an example, the traveling and attraction mechanism preferably use the drive wheels with magnet. Furthermore, in an example, an endless track using permanent magnet may be provided. A form having an attraction mechanism using a magnet and a drive device such as a wheel or an endless track for traveling may be employed. Furthermore, a specification to travel over a welding bead or the like is preferably provided. Furthermore, the position (travel distance or the like) of the self-propelled carrier 1 is preferably measured by the encoder or the like and recorded as a flaw detection position. Any of attitude measurement by an inertial measurement unit (IMU), measurement/position measurement means such as a total station, and self-position detection by GPS or the like may be used. The flaw detection position of the self-propelled carrier 1 is recorded by any method. The self-propelled carrier 1 is preferably a device that is operated wirelessly. If wireless communication is used, any desired range of inspection can be performed without being restricted by a drive/signal transmission cable. As a matter of course, the moving unit in the present invention is not limited to the self-propelled carrier 1. Instead of the self-propelled carrier 1, a manual carrier may be used by being moved by human power. Instead of the self-propelled carrier 1, an arm operable by a drive device may be combined and installed as part of a manufacturing facility.

### [Eddy current flaw detector]

The eddy current flaw detector 2 includes a signal processing unit including an excitation coil, a detection coil, and phase detection. Furthermore, the eddy current flaw detector 2 includes an excitation device for external magnetization, when making an inspection of a steel pipe or the like. The eddy current flaw detector 2 applies an excitation signal having any (appropriate) frequency, to the excitation coil to generate an eddy current in the inspection target member. The eddy current generated in the vicinity of the surface of the inspection target member is detected by the detection coil. When there is a flaw in the inspection target member or when there is a change in thickness, a distribution of the eddy current changes, and a signal detected by the detection coil changes. The signal processing unit performs processing including the phase detection on the detected signal, and extracts detected voltage and phase information. When a differential detection coil is used, a difference in thickness or a flaw positioned near the detection coil is output as a voltage signal. This configuration makes it possible to detect a change in thickness between the detection coils, a crack, a flaw, and the like.

The size of the detection coil is appropriately designed in consideration of the size of a defective portion to be detected, lift-off, and the like. When the differential detection coil is used, impedance of the detection coil and a difference in change in an AC magnetic field near the detection coil are detected as the flaw detection signal. Therefore, when a magnitude of the pit-shaped thickness reduction or the like of the detection target is too large relative to the detection coil, both the detection coils have no difference therebetween, and the difference does not appear as the detection signal. Generally, the pit-shaped thickness reduction is the bowl-shaped thickness reduction having a size of approximately 10 to 30 mm, and therefore, the eddy current flaw detector preferably has a size the same as the thickness reduction. When the inspection target member is a ferromagnetic body, the eddy current is distributed only on the surface, and therefore, in order to detect a change in thickness of the ferromagnetic body, a magnetic field at a level closer to magnetic saturation is applied from the outside, and magnetic permeability is reduced so that the eddy current is distributed to the inside. Therefore, in this configuration, the eddy current flaw detector 2 has the magnetizer for applying external magnetization. Considering the magnetizer mounted on the self-propelled carrier 1, the magnetizer is preferably a permanent magnet, and further, a rare earth magnet such as a neodymium magnet is preferable from the viewpoint of cost and magnetic field strength. When the magnet is strong, the strong magnet contributes to miniaturization and weight reduction.

The eddy current flaw detector 2 detects a change in eddy current between the differential detection coils, and therefore, an output is generated when the differential coils have a difference in thickness between the positions thereof. In the defective portion, the material is lost or becomes an oxide or the like, and the thickness of a metal portion is reduced. Therefore, an eddy current distribution changes, and the eddy current testing enables detection of the thickness reduction. An amplitude of the eddy current testing signal and a thickness reduction rate are correlated, and can be quantified in advance by using a test piece or the like. Preparation of an artificial defect of the detection target (depth/thickness) enables quantification of a corrosion depth on the basis of the detected amplitude.

Note that in the example of the present embodiment, three eddy current flaw detectors are arranged in the width direction of the moving unit (here, the self-propelled carrier 1). Here, the width direction of the moving unit is in the same plane and in a perpendicular direction, with respect to the traveling direction. In this way, when a plurality of eddy current flaw detectors are arranged in the width direction, a wider range can be measured preferably, compared with arrangement of one eddy current flaw detector. The size of one eddy current flaw detector may be appropriately determined. In contrast, when the eddy current flaw detector is increased in size as compared with the pit-shaped thickness reduction, sensitivity tends to decrease. Therefore, the sensitivity is maintained and a measurement range is increased not by increasing the size of one eddy current flaw detector but by increasing the number of the eddy current flaw detectors, and further a measurement time is also preferably reduced. However, it should be noted that, if the number of the eddy current flaw detectors is excessively increased, the moving unit may be increased in size, handling of the entire inspection apparatus including the moving unit is made difficult, or a following structure between the inspection target and the eddy current flaw detectors may be complicated.

### [Electromagnetic ultrasonic thickness gauge]

The electromagnetic ultrasonic thickness gauge 3 includes a coil and a magnet, and induces an ultrasonic wave in the inspection target member by a Lorentz force, a magnetostrictive force, or the like generated by an interaction between a magnetic field applied by the magnet brought closer to the inspection target member which is a conductor and an eddy current generated in the inspection target member by applying a current pulse to the coil similarly brought closer to the inspection target member. In order to apply the magnetic field to the inspection target member, a permanent magnet or an electromagnet can be used. When loaded on the self-propelled carrier 1, a rare earth magnet (permanent magnet) such as a neodymium magnet is preferably used from the viewpoint of weight.

When the permanent magnet is used, the permanent magnet is brought closer to the inspection target member within a range of several millimeters (approximately 1 to 5 mm or less) to apply the magnetic field. Next, the coil is placed in a range in which the magnetic field is applied, and a burst current of approximately several hundred kilohertz to 5 MHz is applied once or several times. Therefore, the eddy current is induced on the surface of the inspection target member facing the coil, an interaction between the eddy current and a static magnetic field applied by the magnet occurs, and the Lorentz force is generated in the object. As a result, an ultrasonic wave having the same frequency as the applied current is generated and propagates in the inspection target member. Ultrasonic vibration generated on the surface propagates in the inspection target member, returns to the surface, and vibrates the surface.

The signal can be detected by the coil as a reverse process of generation, and therefore, a transmission probe and a reception probe can be the same. The detected signal is appropriately amplified by a preamplifier, then captured by a computer, a microcomputer, or the like by AD conversion, and averaged (denoised) by synchronous addition or the like as appropriate to calculate a propagation time of the ultrasonic wave. For use as the plate thickness gauge, a time difference in reflection time when multiple reflection occurs on the surface and the bottom surface of the measurement target is calculated, and the time difference is multiplied by the known sound speed to obtain the plate thickness. For example, the sound speed of steel may be calculated with a known sound speed of approximately 3240 m/s (in the case of the transverse wave). The sound speed is appropriately calibrated according to a steel type or an alloy component.

The electromagnetic ultrasonic wave is generated by the eddy current induced by the coil and the static magnetic field applied by the magnet or the like, and therefore, the electromagnetic ultrasonic wave can be used without being closely attached to the measurement target. Furthermore, the plate thickness gauge using the electromagnetic ultrasonic wave is stable against a change in probe angle and the like and disturbance. From these advantages, use of the electromagnetic ultrasonic thickness gauge is very suitable for automating the inspection method and/or the inspection apparatus according to the present invention.

The captured ultrasonic wave waveform and a result of the plate thickness calculation are preferably transmitted to the external computer or the like by wireless transmission. Alternatively, captured ultrasonic wave waveform and a result of the plate thickness calculation are transmitted to a control unit or the like of the self-propelled carrier 1 or the eddy current flaw detector 2, and recorded and stored together. The captured ultrasonic wave waveform and a result of the plate thickness calculation are used as a result of plate thickness measurement, together with the result of the eddy current testing and a result of traveling of the carriage (position, attitude, and the like).

In the description of the present invention, the electromagnetic ultrasonic thickness gauge has been described as an example of the ultrasonic thickness gauge. This is because the electromagnetic ultrasonic thickness gauge is relatively easy to handle, as described above. However, the effects of the present invention can be similarly obtained by using the ultrasonic thickness gauge other than the electromagnetic ultrasonic thickness gauge. In this case, a suitable medium only needs to be applied between the inspection target member and the ultrasonic thickness gauge. For example, the plate thickness of the inspection target member is measured by using the ultrasonic thickness gauge while applying or interposing water, an ultrasonic gel, or the like with respect to the inspection target member.

### [Example]

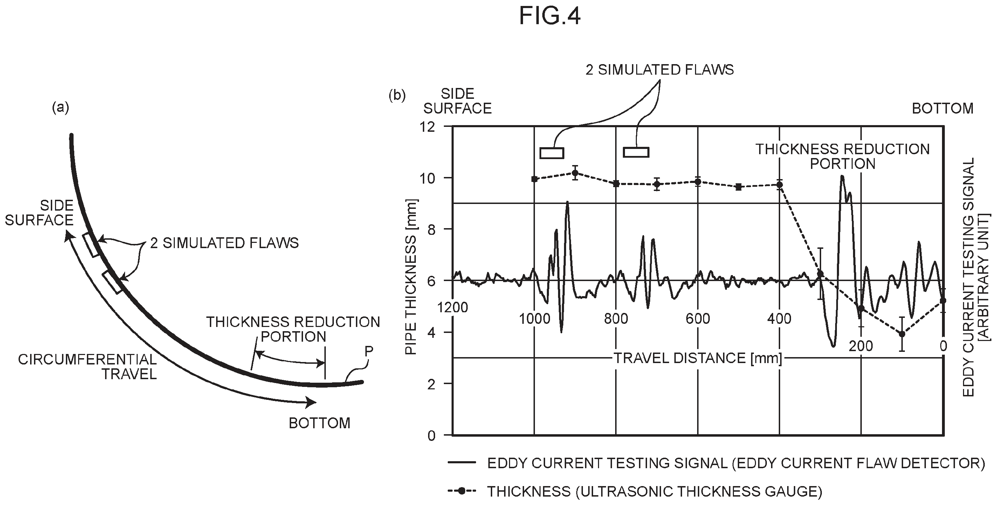

In the present example, a pipe having corrosion thickness reduction was actually inspected using the present invention. As illustrated in FIG. 4(a), a quarter of an outer circumference of a pipe P, from the bottom toward the side surface, was inspected by the self-propelled carrier. The original thickness of the pipe was 10 mm, and an aluminum tape (conductive tape) was applied to two locations of the non-defective portion to obtain a simulated flaw that simulates cracking. Furthermore, it is known in advance that the pit-shaped thickness reduction portion and the uniform thickness reduction portion due to corrosion are adjacent to each other at a lower portion of the pipe. For the eddy current flaw detector 2, the E-shaped coil was used and arranged so as to obtain a difference in detection signals in the traveling direction of the self-propelled carrier 1. The E-shaped coil was set to have a leg interval of 20 mm, a number of windings of 200 turns, an excitation frequency of 10 kHz, and a liftoff of 3 mm. Furthermore, the E-shaped coils of three channels were arranged at a pitch of 30 mm along a width direction of the self-propelled carrier 1, and measurement was performed by switching the channels every 100 ms. Furthermore, a power source for each of the E-shaped coils was a battery, AD conversion for a detection signal was performed in each E-shaped coil, and transmission, recording, and determination of each of the detection signals were performed with respect to an external computer which is the "information processing device" by wireless communication every 100 ms. Meanwhile, the measurement values of the electromagnetic ultrasonic thickness gauge were aggregated at a pitch of 100 mm, and a variation (±1σ) within a range of ±50 mm was calculated as an error bar.

The measurement results are illustrated in FIG. 4 (b). As illustrated in FIG. 4(b), the amplitude of the eddy current testing signal is small in the non-defective portion. In contrast, in the vicinity of the simulated flaw portion and the bottom portion of the pipe, the amplitude of the eddy current testing signal is large, and it is clear that the thickness of the pipe changes. In contrast, the measurement value of the electromagnetic ultrasonic thickness gauge indicates a thickness around the original thickness of 10 mm in the non-defective portion, and the variation thereof is small. In contrast, in the vicinity of the bottom portion of the pipe, the measurement value of the electromagnetic ultrasonic thickness gauge indicates a thickness smaller than the original thickness, and the variation thereof is large. From these, it was determined that the simulated flaws of cracking were on the side surface of the pipe, the pit-shaped thickness reduction and the uniform thickness reduction adjacent to the pit-shaped thickness reduction were in the vicinity of the bottom of the pipe, and portions other than these two locations were sound. As a result, according to the present invention, it was confirmed that the defective portion of the pipe can be accurately detected.

Although the embodiments to which the invention made by the present inventors are applied have been described above, the present invention is not limited to the descriptions and drawings constituting part of the disclosure of the present invention according to the present embodiment. In other words, other embodiments, examples, operations and techniques, and the like made by those skilled in the art and the like on the basis of the present embodiment are all included in the scope of the present invention.

### Industrial Applicability

According to the present invention, it is possible to provide the inspection method and the inspection apparatus that are configured to accurately detect the defective portion from the inspection target member. Furthermore, according to the present invention, it is possible to provide the member repair method that is configured to suppress occurrence of a trouble caused by the defective portion of the member.

### Reference Signs List

- 1: SELF-PROPELLED CARRIER
- 1a: DRIVE WHEEL
- 2: EDDY CURRENT FLAW DETECTOR
- 3: ELECTROMAGNETIC ULTRASONIC THICKNESS GAUGE
- D1: BOWL-SHAPED DEFECT
- D2: V-SHAPED GROOVE
- P: PIPE
- S: STEEL PLATE

## Claims

1. An inspection method for detecting a defective portion from an inspection target member, the inspection method comprising:
a first detection step of detecting a first signal from an inspection region on a surface of the inspection target member by using an eddy current flaw detector;
a second detection step of detecting a second signal from the inspection region by using an ultrasonic thickness gauge; and
a determination step of determining that there is a defective portion in the inspection region, when at least one of the first signal and the second signal indicates an abnormal value.

2. The inspection method according to claim 1, wherein the determination step includes a step of determining that there is a crack in the inspection region when the first signal indicates the abnormal value and the second signal indicates a normal value, determining that there is pit-shaped thickness reduction in the inspection region when both the first signal and the second signal indicate the abnormal values, and determining that there is uniform thickness reduction in the inspection region when the first signal indicates the normal value and the second signal indicates the abnormal value.

3. A member repair method comprising a repairing step of repairing or replacing a defective portion of a member detected using the inspection method according to claim 1 or 2.

4. An inspection apparatus for detecting a defective portion from an inspection target member, the inspection apparatus comprising:
an eddy current flaw detector configured to detect a first signal from an inspection region of a surface of the inspection target member;
an ultrasonic thickness gauge configured to detect a second signal from the inspection region; and
an information processing device configured to determine that there is a defective portion in the inspection region, when at least one of the first signal and the second signal indicates an abnormal value.

5. The inspection apparatus according to claim 4, further comprising a moving unit configured to move the eddy current flaw detector and the ultrasonic thickness gauge on the surface of the inspection target member.
